# EUROPEAN PATENT APPLICATION

(11) **EP 4 628 194 A1**
(43) Date of publication of application: **08.10.2025**
(21) Application number: 25157746.6
(22) Date of filing: 13.02.2025
(51) Int. Cl.: B01D 53/14, B01D 53/18

(54) **A SYSTEM AND METHOD FOR SEPARATING A GAS COMPONENT FROM A GAS MIXTURE**

(30) Priority: 13.02.2024 SE 2450137
(71) Applicant: Grimaldi Development AB, 131 26 Nacka Strand (SE)
(72) Inventor: HÄGGMARK, Carl, 187 51 Täby (SE); KARLSSON, Dan Öivind, 147 91 Grödinge (SE); FRANZÉN, Peter, 124 76 Bandhagen (SE); NAJARNEZHADMASHHADI, Ali, 187 37 Täby (SE); INGE, Claes, 131 72 Nacka (SE); OLAI, Oskar, 141 40 Huddinge (SE)
(74) Representative: AWA Sweden AB

(57) **Abstract**

The present invention relates to a system (1) for separation of a gas component (107) from a gas mixture (110) comprising a spray tower (101) having a longitudinal extension between a first end portion (104) and a second end portion (105). The system (1) further comprises a gas inlet (102) arranged at the first end portion (104) of the spray tower (101) for introducing the gas mixture (110) into the spray tower (101), and a gas outlet (103) arranged at either the first or the second end portion (105) of the spray tower (101) for emitting purified gas (131), wherein the gas mixture (110) is transported from the gas inlet (102) to the gas outlet (103). The system (1) further comprises a liquid inlet (106) arranged along the longitudinal extension of the spray tower (101), the liquid inlet (106) being configured for introducing a first liquid (111) for capturing the gas component (107) thus separating the gas component (107) from the gas mixture (110) and forming the purified gas (131) and a second liquid (108, 109), and a liquid outlet (112) arranged along the longitudinal extension of the spray tower (101) at a distance from the liquid inlet (106), the liquid outlet (112) being configured for removing the second liquid (109). A portion of the second liquid (108) is transported through the gas outlet (103) along with the purified gas (131). The system (1) further comprises at least one separating device (130) arranged downstream from the gas outlet (103) and configured for separating the second liquid (108) from the purified gas (131).

## Description

### TECHNICAL FIELD

The present invention relates to a system and a method for separating a gas component from a gas mixture. In particular, the present invention relates to separation of carbon dioxide (CO₂) from a gas mixture.

### BACKGROUND

Separation of various gas components form a gas mixture has been subject to extensive research in order to prevent emission of harmful gases into the atmosphere. For instance, it may be desirable to separate sulfur oxides from an exhaust gas emitted from a diesel engine. Such systems are described in e.g. WO 2018/231105 and WO 2020/180235.

Considering the increasing problem of global warming, there is an urge to minimize emission of carbon dioxide (CO₂). Thus, separation of CO₂ from flue gases is a rapidly developing field. It can be performed in various ways. One conventional method utilizes a scrubber system and temperature and pressure cycles to capture the CO₂ from flue gases in a solvent liquid. The method is a two-step procedure. The first step is carried out in an absorption tower. CO₂ contained within a flue gas is absorbed by the solvent liquid. The absorption tower contains filler material, so called packed-bed material. The packed-bed material creates a large contact surface between the flue gases and the solvent liquid and thereby facilitates the absorbance of CO₂. Since the absorption tower is filled with packed-bed material, there will be a pressure drop in the absorption tower. It is also preferable to have an overpressure around 7-15 bar within the absorption tower to facilitate the solubility of CO₂ in the solvent liquid. Subsequently, the CO₂ is released in a desorption tower. The released CO₂ is then pressurized again and is thereby turned into liquid form. The CO₂ in liquid form can be stored permanently in boreholes or be further treated.

The above-mentioned method suffers from the disadvantage of requiring compressors in order to enable pressurizing of the absorption tower and to overcome the pressure drop. Thus, the flow of flue gas must be pressurized by means of compressors upstream from the absorption tower, which is costly and requires advanced and expensive integrated technology.

GB 2,461,547 describes a condensation apparatus and a method for the removal of a first substance from a gas mixture which is composed of the first substance in gaseous phase and at least one additional substance in gaseous phase. The condensation apparatus 10 comprises a condensation chamber 12 with an inlet 17 for the gas mixture and an outlet 18 such that a condensation space 14 is created between the inlet and the outlet. The condensation space comprises one or more condensation sections, where each condensation section comprises: - distributing means 23 for the distribution of the first substance, in the form of a spray, into the gas mixture, and - cooling means 37 arranged below the distributing means wherein a cooling medium is circulated. The condensation space is provided with collecting means 26 such that at least a portion of the first substance in liquid form can be collected and recirculated whereby the declining condensation temperature, as a result of declining partial pressure of the condensing component, is used to enhance condensation in the previous condensation steps.

The solution described above thus relies on thermodynamical phase separation wherein one component of a gas mixture is transferred into a liquid by changing temperature and/or pressure, and subsequently separated from the gas mixture. The drawback of such an apparatus is that the component to be separated needs to be cooled upon condensation, which is an energy-consuming process, since it requires a cooling medium and a system for recirculation of the cooling medium.

Another conventionally used method to separate CO₂ from flue gas is to use a Rotary Packed Bed (RPB) absorber, as disclosed in US 11,141,694.

The RPB contains packed-bed material, which is placed on a rotatable disk, allowing the packed-bed material to rotate. A solvent liquid is provided from an inner-radius of the RPB and flows by means of centrifugal force through the packed-bed material towards the outer radius of the RPB. Flue gas is provided from an outer radius of the RPB. In this way, the solvent liquid and the flue gas flows in a cross-current or counter-current direction. The counter-current flow and the packed-bed material facilitates the reaction between the solvent liquid and the CO₂ depleted flue gas.

The heated CO₂ rich solvent may further be feed to a RPB stripper. The RPB may rotate to generate centrifugal force exerted on the CO₂ rich solvent at high temperature. Due to the centrifugal force exerted on the CO₂ rich solvent at high temperature, it may be ejected through the packed-bed material and accumulated in a solvent sump. Further heating may turn the CO₂ rich solvent into steam, which may be transferred from the RPB stripper into a condenser. In the condenser, the steam and CO₂ may be turned into a condensate. Finally, water upon condensation may be separated from the CO₂.

Common drawbacks of the scrubber systems described above are requirement for a filler material in order to create a large contact surface between gas and liquid. If any type of sediment or reaction material is formed during the process, it can lead to the filler material being saturated over time. This would reduce or completely block the flow of gas and fluid through the filler material.

Another disadvantage of using conventional scrubbing methods and devices is the large size of their components, such as the absorption tower, the desorption tower or the rotary RPB units. This requires a vast amount of space which also adds to the high cost of the system.

Further, it is also necessary to include steps for pressurizing and heating the CO₂ rich solvent liquid to achieve the desired effect in each respective method or device described in the prior art, which is costly and requires advanced integrated technology.

Therefore, there is a need for developing an improved system for separation of a gas component, in particular CO₂, from a gas mixture, in particular flue gases, which is cost- and space-efficient and which requires minimal maintenance.

### SUMMARY OF THE INVENTION

An object of the invention is to alleviate at least some of the drawbacks of the prior art. This and other objects, which will become apparent in the following, are accomplished by a system as defined in the accompanying independent claim.

The present invention thus relates to a system for separation of a gas component from a gas mixture. It should be noted that the separation of a gas component according to the present invention is based on adsorption and/or chemical reaction between the gas component and a first liquid. According to the present invention, at least one gas component may be separated. Further, a plurality of gas components may be separated, provided that these components are soluble in the first liquid, e.g. CO₂ and SO₂. The system of the present invention comprises a spray tower having a longitudinal extension between a first end portion and a second end portion. The longitudinal extension is preferably vertical in relation to the ground, wherein the first end portion facing downwards and the second end portion facing upwards. However, the spray tower may be arranged in different orientations so that it is not vertical to the ground. The spray tower may also have different geometrical shapes such as cylindrical, rectangular, spherical or other geometrical shape.

The spray tower is, apart from the gas mixture and first and second liquid, empty of content. This implies that the pressure drop in the spray tower will remain low. Thereby, the gas flow through the spray tower may be driven by a simple fan or by at least one separating device as will be described below. The low or non-existent pressure drop within the spray tower is advantageous because no complex or expensive system is needed to generate the gas flow.

The fact that the spray tower is empty further facilitates maintenance and cleaning of the spray tower. As mentioned above, prior art systems use filler material that can easily be saturated by sediments formed during the process, which requires replacement of the filler material over time. In contrast to packed-bed towers, known from the prior art, an empty spray tower may function as a hollow column. A fine mist of droplets of the first liquid may be released at the top of the tower by a spraying nozzle. The gas absorption rate into the droplets increases with decreasing droplet diameter due to higher droplet surface area-to-volume ratio, surpassing the absorption rate of the filler material in a packed-bed absorption tower.

The spray tower may also have a transversal extension being perpendicular to the longitudinal extension of the spray tower. The spray tower has a cross-section along the transversal extension thereof, the cross-section having a diameter. The cross-section may have different geometrical shapes, such as circular, oval, triangular, rectangular or other geometrical shape. The longitudinal extension of the spray tower may be significantly greater than the diameter of the spray tower. In other words, the spray tower may be elongated. The longitudinal extension of the spray tower varies depending on the industrial application. For example, within mobile systems for trucks the longitudinal extension may be in the range from 50 cm to 2 m, while in systems adapted to marine vessels, the longitudinal extension may be in the range from 2 m to 15 m. Further, for land based power plants, the longitudinal extension may be in the range from 2 m to 25 m.

The transversal extension of the spray tower also varies depending on the industrial application. For example, within mobile systems for trucks and systems for marine ships the transversal extension may be in the range from 50 cm to 2 m, while for land based power plants, the transversal extension may be in the range from 50 cm to 5 m.

The gas component to be separated may be carbon dioxide (CO₂). The gas mixture could by way of example be a flue gas generated from an energy consuming or energy generating assembly such as a power plant, a motor vehicle or a marine diesel engine fueled by heavy fuel oil. It should be noted that other type of gas components, for example sulfur oxides (SOx), could also potentially be separated using the system of the present invention. The gas mixture can also be another composition of gases, not necessarily considered a flue gas.

The system further comprises a gas inlet arranged at the first end portion of the spray tower for introducing the gas mixture into the spray tower. The gas inlet may be a polar inlet configured to facilitate the flow distribution of the gas mixture in the spray tower. Such a polar inlet may enhance the distribution of gas mixture within the spray tower, such that the gas mixture is distributed along the entire transversal extension of the spray tower. In order to improve the flow distribution of the gas mixture within the spray tower, the system may further comprise a gas distributor positioned at the first end portion of the spray tower and configured to facilitate the flow of said gas mixture along the longitudinal extension of the spray tower. Consequently, a combination of a polar inlet and a gas distributor can be advantageous for distributing the gas mixture within the spray tower. As described above, distributing the gas mixture over the entire volume of the spray tower is advantageous, since it maximizes the contact area of the gas mixture and the first liquid and facilitates the reaction and/or absorption between the gas component and the first liquid droplets, as will be described in detail below.

The temperature of the gas mixture entering the spray tower may be from 40°C to 80°C, in particular from 50°C to 60°C. To this end, the system of the present invention may comprise a pretreatment unit arranged upstream from the gas inlet, wherein the gas mixture may be cooled to the desired temperature, e.g. by means of evaporative cooling. Such a pre-treatment unit may further be used for saturating the gas mixture with water vapour in order to avoid modification of the droplet size of the first liquid upon contact with the gas mixture. Further, such a pretreatment unit may comprise a filter in order to remove solid particles from the gas mixture.

The system further comprises a gas outlet arranged at either the first or the second end portion of the spray tower for emitting purified gas and a portion of a second liquid. It must be noted that the second liquid is different from the first liquid. By the term "different" in the context of the present invention is understood as having different chemical composition. Preferably, the gas outlet is arranged at the second end portion of the spray tower. The gas mixture is transported from the gas inlet to the gas outlet. By the term "purified gas" is understood the gas mixture from which at least a portion of the gas component has been removed. Put differently, the concentration of the gas component in the gas mixture introduced through the gas inlet is higher than the concentration of the gas component in the purified gas emitted through the gas outlet. In the field of CO₂ separation from flue gas, 90 % capture of CO₂ is usually considered a benchmark.

The gas mixture thus flows along the longitudinal extension of the spray tower. By ensuring that the gas mixture flows along the entire longitudinal extension of the spray tower, residence time of the gas mixture within the spray tower is maximized, thus maximizing the uptake of the gas component by the first liquid from the gas mixture.

The system further comprises a liquid inlet arranged anywhere along the longitudinal extension of the spray tower. The liquid inlet is configured for introducing a first liquid for capturing by absorption and/or chemical reaction the gas component thus separating the gas component from the gas mixture and forming the purified gas and a second liquid.

The system may comprise multiple liquid inlets along the longitudinal extension of the spray tower. The liquid inlet may also be arranged at either of the first and the second end portions of the spray tower. In other words, the liquid inlet may be arranged at the first end portion of the spray tower, i.e. at the same end portion of the spray tower as the gas inlet. In such an embodiment, the gas mixture and the first liquid move in the same direction along the longitudinal extension of the spray tower. Such an embodiment offers the advantage of an improved capturing of the gas component from the gas mixture, since the first liquid comes in contact with the gas mixture introduced through the gas inlet and thus having maximal concentration of the gas component.

Alternatively, the liquid inlet may be arranged at the second end portion of the spray tower, i.e. at the end portion being opposite to the end portion wherein the gas inlet is arranged. In such an embodiment, the flows of the gas mixture and the first liquid move along the longitudinal extension of the spray tower in a counter current manner. An advantage of having a counter current flow is that it provides substantial benefits in terms of efficiency and effectiveness. The counter current flow allows for a greater concentration gradient between the gas and the liquid phase, facilitating mass transfer. Having a counter current flow in the spray tower ensures that the fresh droplets of the first liquid interact with the gas mixture having the lowest concentration of the gas component, thus enhancing absorption efficiency.

The first liquid may be pressurized in order to facilitate droplet formation and decrease the size of the droplets. Typically the pressure does not exceed 10 bar. However, for very small droplets to form, the pressure may need to be increased.

The first liquid may be an alkaline liquid, such as KOH, NaOH, NH₃, K₂CO₃, or monoetanolamine (MEA). In particular, the first liquid may be an aqueous solution of sodium hydroxide (NaOH) or an aqueous solution of monoethanolamine (MEA).

As mentioned above, the gas component separated from the gas mixture may in particular be CO₂. In such an embodiment, the first liquid is an alkaline liquid, in particular an aqueous solution of sodium hydroxide (NaOH). The advantage of using an alkaline liquid such as NaOH as the first liquid is that alkaline liquids are highly reactive to CO₂. If aqueous solution of NaOH is used as the first liquid, the chemical reactions are as follows:

2NaOH (aq)+ CO₂ (g) → Na₂CO₃ (aq) + H₂O (I)

Na₂CO₃ (aq) + H₂O (I) + CO₂ (g) → 2NaHCO₃ (aq)

The overall reaction is thus:

2NaOH (aq)+ 2CO₂ (g) → 2NaHCO₃ (aq)

According to such an embodiment, the first liquid is aqueous NaOH, and the second liquid is aqueous NaHCOs. Using an alkaline first liquid such as NaOH would increase the saturation of CO₂ in the second liquid droplets, thus maximizing the amount of CO₂ removed from the gas mixture by separating the second liquid in the separating device.

In order to maximize the uptake of the gas component from the gas mixture, it is desirable to maximize the surface area of the droplets of the first liquid. To this end, the system of the present invention may further comprise at least one nozzle positioned downstream from the liquid inlet. By producing smaller droplets, this design effectively increases the surface area, enhancing the efficiency of gas absorption.

Such at least one nozzle may form small droplets of the first liquid. The first liquid droplets may thereby be distributed homogenously over the entire volume of the spray tower, thus avoiding areas wherein the gas mixture may escape contact with the first liquid. Further, since the gas component, e.g. CO₂, may have rather slow reaction kinetics, it may be desirable to maximize the surface area of the droplets of the first liquid, which is achieved by using the at least one nozzle.

The at least one nozzle may be in the form of a plate comprising a plurality of apertures. The at least one nozzle may be configured to generate a uniform flow of first liquid droplets.

Further, a plurality of nozzles may be distributed along the longitudinal extension of the spray tower, thus even further increasing the spread of the first liquid droplets and facilitating the reaction between the gas component and the first liquid. Nozzles may also be arranged upstream the gas inlet.

Another advantage of having a large surface area of first liquid droplets for the gas component to react with, is that it allows to use less first liquid. Thereby, the design of the spray tower may be more compact compared to conventional absorption or spray towers with filler material, such as packed-bed absorption towers.

Since the present inventive concept allows the design of the system to be more compact in comparison to prior art, yet another advantage becomes apparent. The system of the present invention may be utilized as a mobile gas component capture device. For example, it may be used for separating CO₂ from flue gas in provisional power stations or where more compact systems are desirable such as on ships or motor vehicles.

Different size of first and second liquid droplets may be formed in the spray tower. The gas component may react with first liquid droplets of all sizes. Large second liquid droplets will be separated from the gas mixture and/or the purified gas by means of gravity. On the other hand, smaller second liquid droplets will accompany the purified gas flowing out through the gas outlet. Such second liquid will be removed by means of the separating device, as will be described in detail below. Therefore, the particular advantage of the system of the present invention is that the average median size of the droplets of the first liquid is decreased compared to the systems of the prior art, where smaller second liquid droplets that may be released through the gas outlet together with the purified gas must be avoided. Since the surface area of the droplets of the first liquid is increased by decreasing the average median size of the droplets, the gas flow can be substantially higher in the system of the present invention, compared to prior art. If the gas component to separate is CO₂, the gas flow in the system of the present invention is preferably from 1 to 5 meters per second. However, for separation of other gas components from flue gas, the gas flow may be higher than 5 m/s.

The droplets of the first liquid may have a diameter in the range from 10 µm to 500 µm. Droplets of size between 10-500 microns may either by means of gravity fall down to the liquid outlet or accompany the purified gas out through the gas outlet. The droplets of the first liquid should be small enough not to be separated by gravity prematurely, i.e. before the first liquid has reacted with the gas component thus forming the second liquid. At the same time, the droplets of the first liquid should be large enough not to leave the spray tower prematurely, i.e. before the first liquid has reacted with the gas component. The optimal size of the droplets of the first liquid is such that the droplets are substantially floating in the gas flow.

The system further comprises a liquid outlet being arranged along the longitudinal extension of the spray tower at a distance from the liquid inlet. In other words, the liquid outlet may be arranged at the same end portion as the liquid inlet, or at the opposite end portion from the liquid inlet, or anywhere along the longitudinal extension of the spray tower at a distance from the liquid inlet. The distance between the liquid outlet and the liquid inlet may be any distance. For example, the distance may be the whole longitudinal extension of the spray tower, or ½ the longitudinal extension of the spray tower, or 1/3 the longitudinal extension of the spray tower, or ¼ of the longitudinal extension of the spray tower, or the distance may be even smaller. However, preferably the liquid outlet is arranged at the first end portion of the spray tower.

The system may further comprise a liquid capture device upstream of the liquid outlet. Such a liquid capture device may be in the form of a plate comprising apertures, through which the second liquid formed during capturing of the gas component will pass on its way out from the spray tower. Consequently, there will be no accumulation of second liquid within the spray tower. Subsequently, the second liquid passing out from the spray tower may further be treated in a treatment unit as will be described in greater detail below.

The liquid outlet is configured for removing the second liquid which is formed when the gas component is removed from the gas mixture by absorption and/or chemical reaction with the first liquid. The droplets of the second liquid having a size being above a predetermined threshold will be separated from the gas mixture and/or the purified gas by means of gravity and will eventually be released through the liquid outlet and will be removed from the spray tower. On the other hand, the droplets of the second liquid having a size below the predetermined threshold will move along with the gas mixture and/or the purified gas towards the gas outlet and will subsequently be emitted through the gas outlet. Such contamination of the purified gas is indeed undesirable.

In order to avoid this, the system of the present invention comprises at least one separating device arranged downstream from the gas outlet and configured for separating the second liquid from the purified gas.

Consequently, the system of the present invention offers the advantage of allowing very small droplets of the first liquid, thus ensuring that the surface area of the droplets of the first liquid is maximized, to capture the gas component, thus maximizing the uptake of the gas component from the gas mixture. The droplets of the second liquid formed upon such a capturing, that are too small to be separated by gravity will be separated in the separating device, thus allowing emission of purified gas which is substantially free from the second liquid and the gas component. Further, there is no need for pressurizing or heating the second liquid in order to facilitate the separation of the second liquid from the purified gas.

The separating device may be of any type. For example, the separating device may be a centrifugal separator using centrifugal force to separate the second liquid from the purified gas. The system may comprise a plurality of separating devices positioned in a consecutive manner downstream from the gas outlet. Using more than one separating device may increase the separation efficiency of the second liquid from the purified gas.

In particular, the separating device may be a disk-stack separator. Such a disk-stack separator uses centrifugal force to perform the separation of second liquid from the purified gas. One of the advantages of using such a disk-stack separator is that both solids and liquids can be separated using such technology.

The system of the present invention may comprise a plurality of disc stack separators in order to achieve an efficient removal of the second liquid from the purified gas. Each disc stack separator may comprise a rotor with a stack of narrowly spaced conical separation discs. The separators may also be of a more basic type, having radial wings instead of conical discs in the rotor. Each separator may preferably be of a counter-current type, wherein the intake flow moves radially inwards through the interspaces between the discs, against the pumping effect generated by rotational movement of the rotors. Alternatively, each separator may be of a co-current type. If a plurality of disc stack separator is used, each of the separators may be of same or different type.

In an embodiment wherein the separators are of a counter-current type, each separator rotor may further be provided with a fan which rotates together with the rotor. The fan may be arranged for enhancing the flow of purified gas from the separating device to the ambient. Optionally, instead of an individual fan for each separator, a common fan may be arranged upstream or downstream of the separating device for feeding the purified gas and the second liquid through the disc stack separators and discharging the purified gas to the ambient. The disc stack separators are driven either by an individual electric motor or by a common electric motor and a belt transmission.

The second liquid which is separated from the purified gas by the separating device may be led back to the spray tower or directly to the liquid outlet and combined with the second liquid that has been separated by gravity.

The second liquid may be treated in a treatment unit, such that the gas component is released and the first liquid is formed. The gas component being released from the second liquid may be further treated such that is becomes suitable for a permanent storage. The first liquid formed in the treatment unit may be recirculated to the liquid inlet, thus decreasing the amount of the first liquid needed for separation of the gas component, thus keeping cost down and lowering the environmental impact.

The treatment unit may comprise a liquid inlet for introducing a third liquid into the treatment unit. The third liquid may react with the second liquid such that the gas component is released from the second liquid and recaptured in a solid particle phase and regenerating the first liquid.

Alternatively, the treatment unit may comprise a heating device such that the gas component is separated by heat. By heating the second liquid, the chemical reaction that initially captured gas component is reversed, resulting in the release of the gas component and regeneration of the first liquid. In such an embodiment, the gas component that has been separated may be compressed thus being turned into liquid form such that it may be permanently stored in e.g. boreholes. Alternatively, if the gas component to be separated is CO₂ the treatment unit may be a causticization device, wherein added calcium oxide (solid) reacts into calcium hydroxide (liquid) which is added to and reacts with the second liquid, forming calcium carbonate (solid) for permanent storage, or for production of fuels or building materials. The produced calcium carbonate can in turn be heated to regenerate calcium oxide and release carbon dioxide gas (the calcination process). The released CO₂-gas can then be liquified by pressure and put into boreholes for permanent storage.

Finally, the system of the present invention may comprise a sensor for detecting the gas component in the purified gas. Such a sensor may be arranged upstream or downstream from the gas outlet and may be calibrated to issue an audible and/or a visual warning should the concentration of the gas component being present in the purified gas exceed a predetermined threshold.

Further the present invention relates to a method for separation of a gas component from a gas mixture, the method comprising the steps of:
a) introducing the gas mixture into a spray tower having a longitudinal extension between a first end portion and a second end portion, through a gas inlet arranged at the first end portion of the spray tower;
b) introducing a first liquid through a liquid inlet arranged along the longitudinal extension of said spray tower;
c) capturing the gas component by means of the first liquid, thus separating the gas component from the gas mixture and forming a purified gas and a second liquid;
d) emitting the purified gas and a portion of the second liquid through a gas outlet arranged at either the first or the second end portion of the spray tower;
e) allowing the purified gas and the second liquid to pass through at least one separating device arranged downstream from the gas outlet, thus separating the second liquid from the purified gas;
f) collecting the second liquid through a liquid outlet arranged along the longitudinal extension of said spray tower at a distance from said liquid inlet.

It should be noted that the method of the present invention may comprise additional steps, such as purifying, cooling, heating, compressing and the like. As mentioned above, the method of the present invention provides improved separation of the gas component from the gas mixture in terms of cost and efficiency.

### BRIEF DESCRIPTION OF THE DRAWINGS

Fig 1 shows a first embodiment of a system for separation of a gas component.
Fig 2 shows a second embodiment of a system for separation of a gas component.
Fig 3 shows a third embodiment of a system for separation of a gas component.
Fig 4 shows a fourth embodiment of a system for separation of a gas component.

### DETAILED DESCRIPTION OF THE INVENTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical or similar reference numerals denote the same or similar components having a same or similar function, unless specifically stated otherwise.

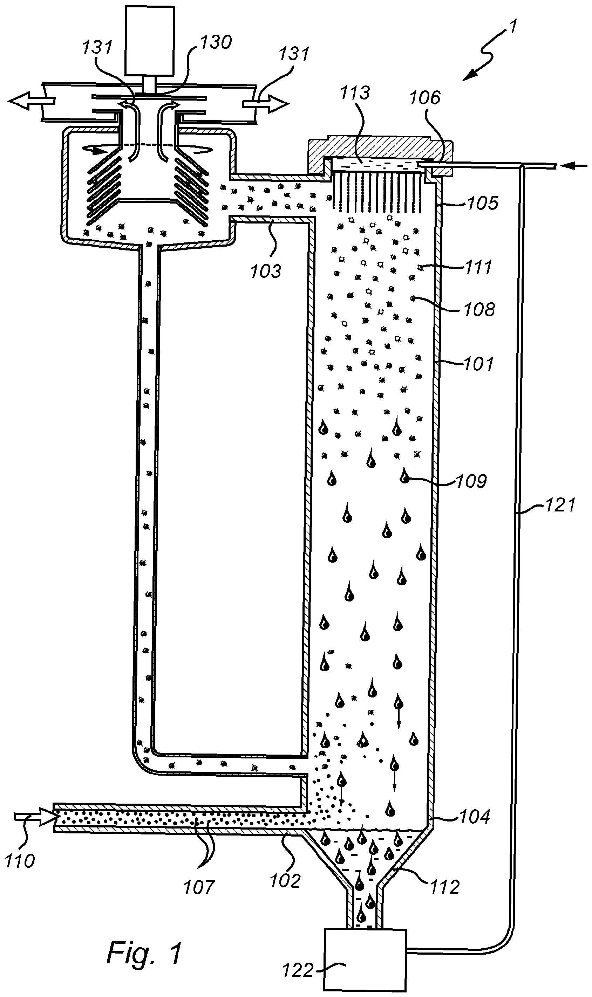

Fig. 1 depicts a system 1 for separation of a gas component from a gas mixture. The system 1 comprises a spray tower 101 having a longitudinal extension between a first end portion 104 and a second end portion 105. The longitudinal extension is vertical wherein the first end portion 104 facing downwards and the second end portion 105 is facing upwards.

The spray tower is, beyond the gas mixture 110 and first and second liquid 108, 111, empty of content. This implies that the pressure drop in the spray tower 101 remains low. Thereby, the gas flow through the spray tower 101 is driven by a simple fan or by at least one separating device 130, thus offering the advantage of eliminating the need for complex or expensive system to generate the gas flow.

The fact that the spray tower 101 is empty further facilitates maintenance and cleaning of the spray tower 101.

The system 1 further comprise a gas inlet 102 arranged at the first end portion 104 of the spray tower 101 for introducing the gas mixture 110 into the spray tower 101. A gas outlet 103 is arranged at the second end portion 105 of the spray tower 101 for emitting purified gas 131 and a second liquid 108, wherein the gas mixture 110 is transported from the gas inlet to the gas outlet.

Further there is a liquid inlet 106 arranged at the second end portion 105 of the spray tower 101. The liquid inlet 106 is configured for introducing a first liquid 108 for capturing the gas component 107 thus separating the gas component 107 from the gas mixture 110 and forming the purified gas 131 and a second liquid 108, 109.

The system 1 illustrated in Fig. 1 allows the gas mixture 110 and the first liquid 111 to flow through the spray tower 101 in a counter-current way.

To further facilitate the reaction between the gas mixture 110 and droplets of the first liquid 111, the first liquid 111 is provided to the spray tower 101 through a nozzle 113. The nozzle 113 transforms the first liquid 111 in small droplets. The droplets of the first liquid 111 are thereby distributed homogenously over the entire volume of the spray tower 101. By spreading the first liquid droplets 111 within the spray tower 101 in such a homogenous manner, there is no flow path through the spray tower where the gas mixture could escape the first liquid and thereby prevent the gas component from reacting with the first liquid. Thus, the accumulated surface area on which reaction between the gas component 107 and the first liquid 111 can take place is maximized.

A liquid outlet 112 is arranged at the first portion 104 of the spray tower 101. The liquid outlet 112 is configured for removing the second liquid 109 from the spray tower 101.

The second liquid 109 is further treated in a treatment unit 122 thus releasing the gas component 107 or capturing the gas component 107 by solidification and forming the first liquid 111. The first liquid 111 is lead back into the spray tower 101 by means of a recirculation tube 121.

A portion of the second liquid 108 is transported through the gas outlet 103 along with the purified gas 131. The system 1 further comprises a separating device 130 arranged downstream from the gas outlet 103 and configured for separating the second liquid 108 from the purified gas 131.

As may be seen in Fig. 1, the separating device 130 positioned downstream of the gas outlet 103 is a conical disk-stack separator 130. Such a conical disk-stack separator 130 uses centrifugal force to perform the separation of second liquid 108 from the purified gas 131. The second liquid 108 which is separated from the purified gas 131 by the conical disk-stack separator 130 is lead back to the spray tower 101. Further on, remaining purified gas 131 is lead out from the system 1.

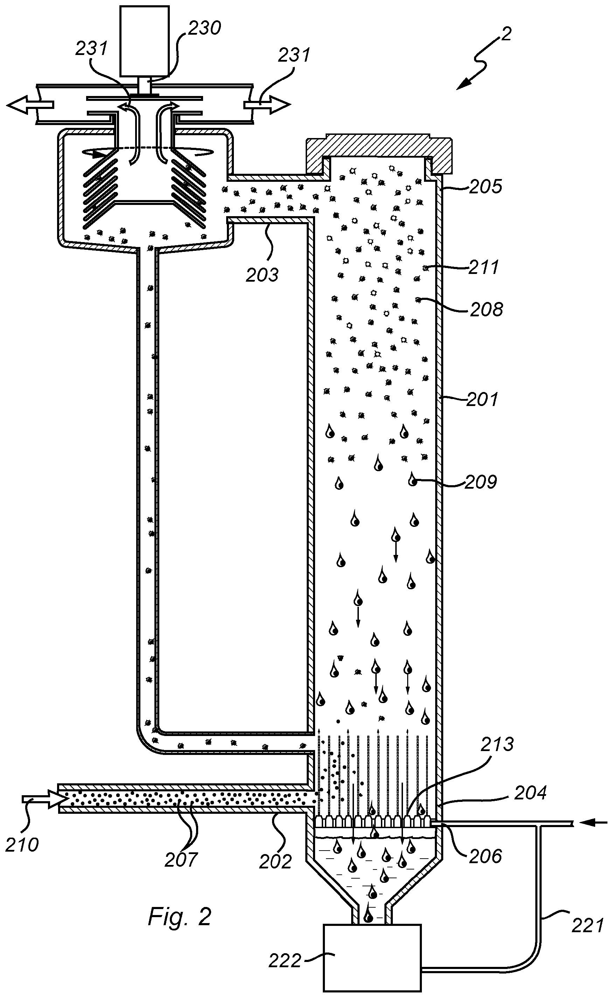

Figure 2 shows a second embodiment of a system 2 for separation of a gas component 207 from a gas mixture 210. The system 2 comprises a liquid inlet 206 arranged at the first end portion 204 of the spray tower 201. Thereby, the gas mixture 210 and the first liquid 211 will flow in the same direction. The liquid inlet 206 is configured for introducing a first liquid 208 for capturing the gas component 207, thus separating the gas component 207 from the gas mixture 210 and forming the purified gas 231 and a second liquid 208, 209.

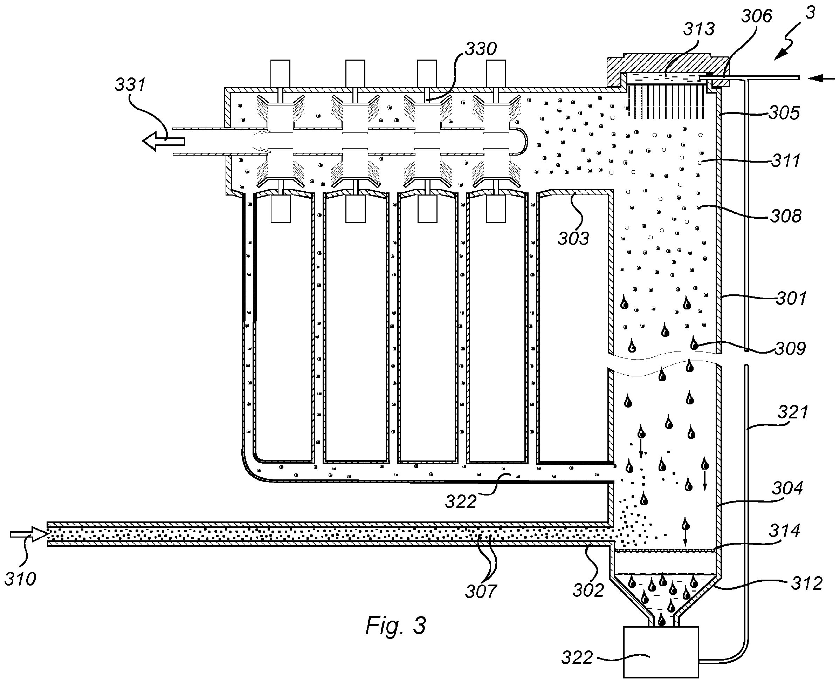

Figure 3 shows a third embodiment of a system 3 for separation of a gas component 307 from a gas mixture 310. System 3 comprises multiple separating devices 330 positioned downstream of the gas outlet 303. Using more than one separating device 330 will increase the separation efficiency of the second liquid 308 from the purified gas 331.

Further, the separating devices 330 positioned downstream of the gas outlet 303, are disk-stack separators 330. Such a disk-stack separator 330 uses centrifugal force to perform the separation of second liquid 308 from the purified gas 331. Subsequently, the purified gas 331 will be led out from the system through a gas outlet arranged between the disk-stack separators 330. A recirculating tube 322 will further recirculate the remaining second liquid 308 back to the spray tower 301.

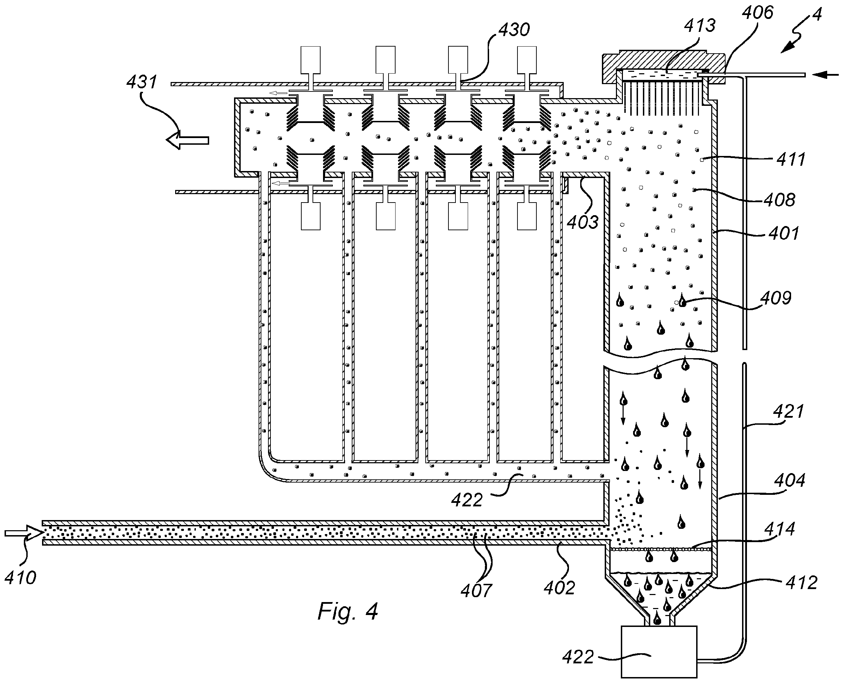

Figure 4 shows a fourth embodiment of a system 4 for separation of a gas component 407 from a gas mixture 410. System 4 comprises multiple separating devices 430 positioned downstream of the gas outlet 403. Using more than one separating device 430 will increase the separation efficiency of the second liquid 408 from the purified gas 431.

Further, the separating devices 430 positioned downstream of the gas outlet 403, are disk-stack separators 430. Such disk-stack separator 430 use centrifugal force to perform the separation of second liquid 408 from the purified gas 431. Subsequently, the purified gas 431 will be led out from the system through a gas outlet arranged on the backside of the disk-stack separators 430. A recirculating tube 422 will further recirculate the remaining second liquid 408 back to the spray tower 401. As may be seen in Fig. 4, the separating devices 430 are inverted compared to the separating devices 330 depicted in Fig. 3.

Although the present invention has been described with reference to various embodiments, those skilled in the art will recognize that changes may be made without departing from the scope of the invention. It is intended that the detailed description be regarded as illustrative and that the appended claims including all the equivalents are intended to define the scope of the invention.

## Claims

1. A system (1) for separation of a gas component (107) from a gas mixture (110) comprising:
a spray tower (101) having a longitudinal extension between a first end portion (104) and a second end portion (105),
a gas inlet (102) arranged at said first end portion (104) of said spray tower (101) for introducing said gas mixture (110) into said spray tower (101),
a gas outlet (103) arranged at either said first or said second end portion (105) of said spray tower (101) for emitting purified gas (131),
wherein said gas mixture (110) is transported from said gas inlet (102) to said gas outlet (103);
a liquid inlet (106) arranged along the longitudinal extension of said spray tower (101), said liquid inlet (106) being configured for introducing a first liquid (111) for capturing said gas component (107) thus separating said gas component (107) from said gas mixture (110) and forming said purified gas (131) and a second liquid (108, 109);
a liquid outlet (112) arranged along the longitudinal extension of said spray tower (101) at a distance from said liquid inlet (106), said liquid outlet (112) being configured for removing said second liquid (109);
wherein a portion of said second liquid (108) is transported through said gas outlet (103) along with said purified gas (131),
and wherein said system (1) further comprises at least one separating device (130) arranged downstream from said gas outlet (103) and configured for separating said second liquid (108) from said purified gas (131).

2. A system (1) according to claim 1, wherein said liquid inlet (106) is positioned either at said first end portion or at said second end portion of said spray tower (110).

3. A system (1) according to any one of the preceding claims, wherein said at least one separating device (130) is a disk stack separator.

4. A system according to any one of the preceding claims,
wherein said gas component (107) is carbon dioxide (CO₂), and wherein said system (1) further comprises a treatment unit (122) arranged downstream from said liquid outlet (112) for releasing said gas component (107) from said second liquid (109) thus forming said first liquid (111).

5. A system (1) according to claim 4, wherein said first liquid (111) formed in said treatment unit (122) is recirculated to said liquid inlet (106).

6. A system (1) according to claim 4 or 5, wherein said treatment unit (122) comprises a liquid inlet for introducing a third liquid into said treatment unit (122).

7. A system (1) according to any one of the preceding claims, further comprising at least one nozzle (113) positioned downstream from said liquid inlet (106).

8. A system (1) according to claim 7, wherein said at least one nozzle (113) is in the form of a plate comprising a plurality of apertures, configured to generate a uniform flow of droplets of said first liquid (111).

9. A system (1) according to claim 8, said droplets (108, 109, 111) having a diameter in the range from 10 µm to 500 µm.

10. A system (1) according to any one of the preceding claims, wherein said first liquid (111) is an alkaline solution.

11. A system (1) according to claim 10 wherein said alkaline solution is sodium hydroxide (NaOH).

12. A system (1) according to any one of the preceding claims, wherein said gas inlet (102) is a polar inlet configured to facilitate the flow distribution of said gas mixture (110) in said spray tower (101).

13. A system (1) according to any of the preceding claims, further comprising a gas distributor positioned at the first end portion (104) of said spray tower (101) and configured to facilitate the flow of said gas mixture (110) along said longitudinal direction of said spray tower (101).

14. A system (1) according to any one of the preceding claims, wherein said system (1) further comprises a liquid capture device (114) upstream from said liquid outlet (112).

15. A method for separation of a gas component (107) from a gas mixture (110), the method comprising the steps of:
a) introducing said gas mixture (110) into a spray tower (101) having a longitudinal extension between a first end portion and a second end portion (104, 105), through a gas inlet (102) arranged at said first end portion (104) of said spray tower (101);
b) introducing a first liquid (111) through a liquid inlet (106) arranged along the longitudinal extension of said spray tower (101);
c) capturing said gas component (107) by means of said first liquid (111), thus separating said gas component (107) from said gas mixture (110) and forming a purified gas (131) and a second liquid (108);
d) emitting said purified gas (131) and a portion of said second liquid (108) through a gas outlet (103) arranged at either said first or said second end portion (105) of said spray tower (101);
e) allowing said purified gas (131) and said second liquid (108) to pass through at least one separating device (130) arranged downstream from said gas outlet (103), thus separating said second liquid (108) from said purified gas (131);
f) collecting said second liquid (108) through a liquid outlet (112) arranged along the longitudinal extension of said spray tower (101) at a distance from said liquid inlet (106).
